Europäisches Patentamt

(19) European Patent Office

Office européen des brevets

(11) Numéro de publication: **0 189 723**
**B1**

(12) **FASCICULE DE BREVET EUROPÉEN**

(45) Date de publication du fascicule du brevet:
08.03.89

(51) Int. Cl.⁴: **F 16 J 15/32**

(21) Numéro de dépôt: **85402656.4**

(22) Date de dépôt: **31.12.85**

(54) Joints d'étanchéité à lèvre.

(30) Priorité: **31.12.84 FR 8420109**

(43) Date de publication de la demande:
**06.08.86 Bulletin 86/32**

(45) Mention de la délivrance du brevet:
**08.03.89 Bulletin 89/10**

(84) Etats contractants désignés:
**DE IT SE**

(56) Documents cité:
**DE-C-3 224 944**
**US-A-2 249 141**
**US-A-4 433 846**

(73) Titulaire: **HUTCHINSON S.A., 2 rue Balzac, F-75008 Paris (FR)**

(72) Inventeur: **Braut, Patrick, Chemin St- Emerance, F-49370 La Poueze (FR)**
Inventeur: **Crapart, René, Baune Ste Gemmes d'Andigne, F-49500 Segre (FR)**

(74) Mandataire: **Behaghel, Pierre, CABINET PLASSERAUD 84 rue d'Amsterdam, F-75009 Paris (FR)**

EP 0 189 723 B1

## Description

L'invention concerne les joints destinés à assurer l'étanchéité au passage d'un arbre à travers une ouverture pratiquée dans une paroi étanche, ledit arbre étant animé d'un mouvement rotatif ou coulissant par rapport à cette paroi ou inversement, joint comportant une lèvre annulaire continue en élastomère prolongeant une extrémité axiale d'un voile annulaire étanche et élastique de forme générale tronconique, l'autre extrémité axiale de ce voile étant raccordée à une armature métallique annulaire profilée en L, c'est-à-dire comportant successivement une rondelle radiale et un manchon axial de fixation prolongeant cette rondelle et entourant le voile, l'ensemble de ce voile et de cette armature formant une rigole annulaire ouverte en direction axiale.

Elle concerne plus spécialement, parmi lesdits joints, ceux qui sont agencés de façon à être facilement démontés par déplacement axial et qui comportent à cet effet une ouverture permettant l'accrochage d'un outil de démontage, ouverture normalement obturée par de l'élastomère.

Dans les modes de réalisation connus desdits joints, l'ouverture est un simple trou évidé axialement dans la rondelle (voir le document DE-C-3 224 944) dans ce cas, l'outil de démontage doit présenter un crochet spécial propre a coopérer avec le trou.

L'invention a pour but, surtout, d'écarter cet inconvénient en rendant possible le démontage du joint à l'aide d'outils aussi répandus que les pointes, tournevis ou analogues.

A cet effet les joints du genre en question selon l'invention sont essentiellement caractérisés en ce que leur ouverture de démontage est réalisée par un crevé pratiqué dans la portion, du manchon, raccordée à la rondelle, la racine de la patte ainsi dégagée se trouvant au niveau de la zone coudée du L, et en ce que cette patte est redressée au moins jusqu'à s'étendre dans le prolongement radial de la rondelle.

Pour que, après le montage du joint sur la paroi, l'ouverture dégagée par le crevé soit accessible par un outil, tel qu'un tournevis, se présentant au voisinage de la zone coudée du L selon une direction sensiblement parallèle à la bissectrice de ce L, la face, de la paroi, contiguë à l'outil, est de préférence chanfreinée ou entaillée.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant au dessin ci-annexé d'une manière bien entendu non limitative.

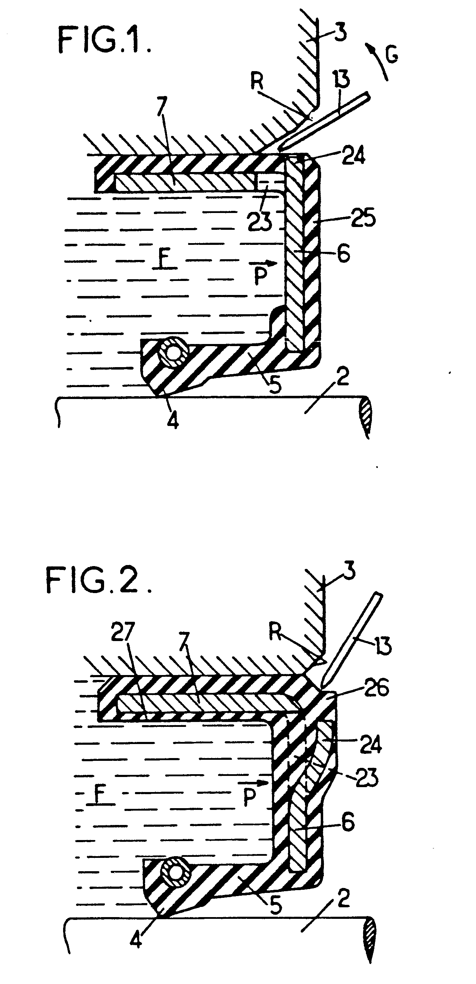

Les figures 1 et 2, de ce dessin, montrent en demi-coupes axiales respectivement deux variantes de joints établis conformément a l'invention.

Dans chaque cas, le joint annulaire considéré entoure un arbre rotatif 2, traverse un alésage d'une paroi rigide 3 dans lequel il est engagé à force et comprend une lèvre annulaire en élastomère 4 formant bloc avec un voile annulaire 5, et une armature annulaire rigide en L composée elle-même d'une rondelle transversale 6 raccordée à un manchon cylindrique 7, de fixation.

L'étanchéité assurée par ce joint s'oppose à la traversée de la paroi 3 par un fluide E présent du côté, de cette paroi, intérieur à un carter ou analogue dont cette paroi fait partie, et la concavité de la rigole annulaire formant ledit joint est tournée vers l'intérieur de ce carter.

Pour faciliter le démontage du joint par glissement de celui-ci dans le sens de la flèche P tendant à le déplacer vers l'extérieur du carter, on pratique, selon l'invention, dans l'armature annulaire en L de ce joint, au moins un crevé à proximité immédiate du coude du L, c'est-à-dire une entaille en U propre à dégager une ouverture 23 en formant une patte 24 qui demeure ancrée par sa racine dans ladite armature.

Dans le mode de réalisation de la figure 1, le crevé est pratiqué dans le manchon 7 et la racine de la patte 24 se trouve au niveau du coude du L.

L'extrémité libre de la patte 24 est alors écartée du manchon, par flexion de la base de cette patte, au moins jusqu'à ce qu'elle s'étende dans le prolongement radial de la rondelle 6, vers l'extérieur de cette rondelle.

La masse en élastomère constitutive de la lèvre 4 et du voile 5 est prolongée tout autour du joint de façon à enrober celui-ci d'une fourrure 25 dont la portion située au droit de l'ouverture 23 forme un opercule obturant cette ouverture.

Pour démonter le joint, il suffit d'introduire la pointe d'un outil 13 dans l'ouverture 23 en perçant l'opercule d'élastomère, puis de redresser l'outil dans le sens de la flèche G, avec un arc-boutement de celui-ci contre la portée en regard R de la paroi 3.

Pour rendre possible ou tout au moins faciliter l'accès de l'ouverture 23 par la pointe d'outil 13, il peut être avantageux de chanfreiner ou évider en conséquence la face correspondante de la paroi 3 au niveau de la portée R.

Dans le mode de réalisation de la figure 2, le crevé est pratiqué dans la rondelle 6 et c'est l'extrémité libre de la patte 24 qui se trouvait avant "crevaison" au niveau du coude du L.

La base de cette patte 24 est écartée par flexion du plan moyen de la rondelle et son extrémité libre est rabattue en direction de ce plan de façon telle qu'elle soit orientée parallèlement audit plan.

La masse d'élastomère constitutive de la lèvre 4 et du voile 5 est ici prolongée de façon à envelopper la totalité de l'armature en L, aussi bien intérieurement qu'extérieurement par respectivement une fourrure extérieure 26 et un tapissage intérieur 27.

Ces couches se rejoignent à travers l'ouverture 23 qu'elles obturent.

Ici encore, pour démonter le joint, il suffit d'introduire la pointe d'un outil 13 dans l'ouverture 23 en perçant l'opercule d'élastomère qui obture cette ouverture, puis d'exercer une traction et/ou une rotation sur l'outil de façon que sa pointe se déplace dans le sens de la flèche P en entraînant le joint avec elle.

Comme précédemment la portée R, de la paroi 3, à proximité de laquelle est introduite la pointe 13 peut être chanfreinée ou entaillée de façon à faciliter cette introduction.

En suite de quoi, et quel que soit le mode de réalisation adopté, on dispose de joints dont la constitution résulte suffisamment de ce qui précède, joints qui se prêtent facilement à un démontage axial.

Il est à noter que l'encombrement global de ces joints est extrêmement réduit aussi bien axialement que radialement ces encombrements ne sont pratiquement pas supérieurs à ceux des joints du même genre actuellement connus et non équipés de moyens facilitant leur démontage axial.

**Revendication**

Joint pour assurer l'étanchéité au passage d'un arbre (2) à travers une paroi (3), comportant une lèvre annulaire (4) en élastomère à une extrémité d'un voile (5) d'allure tronconique prolongé à son autre extrémité par une armature annulaire profilée en L, c'est-à-dire comprenant elle-même successivement une rondelle radiale (6) et un manchon axial de fixation (7) qui entoure le voile, l'ensemble du voile et de l'armature formant une rigole annulaire ouverte en direction axiale, l'armature étant évidée par une ouverture permettant l'accrochage d'un outil de démontage, ouverture normalement obturée par de l'élastomère, caractérisé en ce que l'ouverture (23) est réalisée par un crevé pratiqué dans la portion, du manchon (7), raccordée à la rondelle (6), la racine de la patte (24) ainsi dégagée se trouvant au niveau de la zone coudée du L, et en ce que cette patte est redressée au moins jusqu'à s'étendre dans le prolongement radial de la rondelle.

**Patentanspruch**

Dichtung zum Abdichten der Durchgangsöffnung einer Welle (2) durch eine Wandung bestehend aus einer ringförmigen Lippe (4) aus einem Elastomer, die an einem Ende eines kegelstumpfförmigen Mantels (5) sitzt, an dessen anderes Ende sich eine ringförmige Verstärkung anschließt, die die Form eines L hat und aufeinanderfolgend aus einer radial verlaufenden Ringscheibe (6) und einer sich in axialer Richtung erstreckenden Befestigungshülse (7) besteht, die den Mantel (5) umgibt, wobei der Mantel und die Verstärkung eine ringförmige in axialer Richtung offene Rinne bilden und in der Verstärkung eine normalerweise durch das Elastomer abgedeckte Öffnung (22) zum Ansetzen eines Demontagewerkzeuges angebracht ist, dadurch gekennzeichnet, daß die Öffnung (23) aus einem Einschnitt besteht, der in dem Abschnitt der Befestigungshülse (7) angebracht ist, der mit der Ringscheibe (6) verbunden ist, wobei sich der Fußpunkt einer so ausgeschnittenen Lasche (24) in Höhe der Knickstelle der L-förmigen Verstärkung befindet und daß die Lasche (24) wenigstens soweit ausgebogen ist, daß sie sich in radialer Verlängerung der Ringscheibe erstreckt.

**Claim**

Seal for sealing the passage of a shaft (2) through a wall (3), comprising an elastomer annular lip (4) at an end of a somewhat frustoconical thin part (5) which is extended at its other end by an L shaped annular frame, said frame itself comprising successively a radial disk (6) and an axial mounting sleeve (7) surrounding the thin part, the whole of the thin part and of the frame forming an annular gutter open in the axial direction, the frame being hollowed by an opening allowing hooking of a removing tool, which opening is normally closed by elastomer, characterized in that the opening (23) is made of a split or burst provided in the portion, of the sleeve (7), connected to the disk (6), the root of the so freed lug (24) being placed in the bent area of the L, and in that said lug is straightened at least until it extends in the radial extension of the ring.

# FIG.1.

# FIG.2.